# EUROPEAN PATENT APPLICATION

(11) **EP 0 582 756 A1**
(43) Date of publication of application: **16.02.1994**
(21) Application number: 92307365.4
(22) Date of filing: 12.08.1992
(51) Int. Cl.: G06K 19/16

(54) **Magnetic memory card**

(71) Applicant: NHK SPRING CO.LTD., Yokohama-shi, Kanagawa-ken (JP)
(72) Inventor: Kato, Michio, c/o NHK Spring Co. Ltd., Yokohama-shi, Kanagawa-ken (JP); Sugawara, Tsugutaka, c/o NHK Spring Co. Ltd., Yokohama-shi, Kanagawa-ken (JP)
(74) Representative: Browne, Robin Forsythe, Dr.

(57) **Abstract**

The size reduction of a card reader/writer can be accomplished by allowing a magnetic head (6) for accessing data in a magnetic stripe (3) to be located in the close proximity of optical identification means (7,8) for identifying a light reflecting region (4) having a specific reflective directivity for identification purpose by placing the light reflecting region close to the magnetic stripe on a major surface of the card. By appropriately positioning the light reflecting region, further size reduction of the card reader/writer and prevention of the contamination of the light reflecting region can be accomplished.

## Description

### TECHNICAL FIELD

The present invention relates to a magnetic memory card having a magnetic stripe on its major surface, in particular to such a magnetic memory card which allows its authenticity and validity to be identified with optical identification means. The present invention is also related to a reader/writer for such a card.

### BACKGROUND OF THE INVENTION

Conventionally, to prevent the use of counterfeit magnetic memory cards and to discourage unauthorized repeated use of magnetic memory cards carrying a magnetic stripe on its major surface as means for data storage, a multi-magnetic layer, an optical or magnetic bar code, and punched holes have been used. The above mentioned means, however, are easily analyzed by the counterfeiter, and allows him to counterfeit the card with inexpensive equipment.

Therefore, to prevent unauthorized duplication of a magnetic memory card, affixing a light reflecting region having a specific reflective directivity to a magnetic memory card has been proposed in a copending US patent application No. 07/782,976 filed January 27, 1992 which is a continuation-in-part of US patent application No. 07/547,936 filed July 3, 1990, which are incorporated into this application by reference. According to the disclosure of these patent applications, a hologram having a specific diffractive property is provided on the major surface of the card, so that a light beam projected from a light emitting element of a card reader/writer may be reflected by the hologram and received by predetermined sectors provided in a light receiving element provided around the light emitting element. If the predetermined sectors receive light at a higher intensity than a predetermined level, the card is identified to be authentic. Thus, the hologram serves as a light reflecting region which allows the authenticity of the card to be identified and discourages unauthorized duplication of the card. The hologram may be replaced by a diffraction grating or a multiplicity of U- or V-grooves.

A composite structure for the hologram or the diffraction grating giving rise to composite reflective directivities is proposed in a copending US patent application No. 07/788,569 filed November 6, 1991, which is also a continuation-in-part of US patent application No. 07/547,936 filed July 3, 1990, which are incorporated into this application by reference.

According to the above mentioned structures, analysis of the hologram or the diffraction grating with the intention to counterfeit the card is so difficult, and the cost for duplicating the hologram or diffraction grating is so expensive that the counterfeit of the card and the fraudulent use of the card are practically impossible.

In a magnetic memory card provided with such a light reflecting region, the location of the light reflecting region on the major surface of the card is highly important. When the light reflecting region is provided remote from a magnetic stripe on the major surface of the magnetic memory card, the magnetic head of the card reader/writer has to be located remote from the optical identification means for the light reflecting region so that the card reader/writer becomes undesirably large in size.

In a magnetic memory card which is used in conjunction with a card reader/writer provided with a slot for passing a side portion of the card lengthwise therethrough by hand, the magnetic stripe normally extends in parallel with its travelling direction in the slot or the lengthwise direction of the card. This type of card reader/writer is advantageous because there is no need for the structure for conveying the card, and both the size and the manufacturing cost can be thereby reduced.

When a magnetic memory card having a light reflection region for identification purpose is used with such a card reader/writer, the slot of the card reader/writer has to be deep enough to accommodate the optical identification means for the identification of the light reflecting region in the slot along with the magnetic head, and this leads to an undesirable increase in the size of the card reader/writer.

Further, the light reflecting region must be prevented from contamination because it may cause unsatisfactory operation of the optical identification means. Therefore, the handling of the card would require some care, and it may reduce the market acceptability of the card.

### BRIEF SUMMARY OF THE INVENTION

In view of such shortcomings of the prior art and the recognition by the inventors, a primary object of the present invention is to provide a magnetic memory card provided with a light reflecting region for identification purpose which allows a magnetic card reader/writer therefor to be compact in size and inexpensive to manufacture.

A second object of the present invention is to provide a magnetic memory card provided with a light reflecting region for identification purpose which is not easily optically contaminated and is therefore easy to handle.

A third object of the present invention is to provide a magnetic card reader/writer provided with optical identification means which is compact in size, inexpensive to manufacture, and reliable in use.

These and other objects of the present invention can be accomplished by providing a magnetic memory card carrying a magnetic stripe on a major surface thereof for magnetically recording data therein, comprising a light reflecting region provided on the major surface adjacent the magnetic stripe, the region having a specific reflective directivity which can be detected with optical identification means. The light reflecting region may consist of a hologram, a diffraction grating or a multiplicity of U- or V-shaped parallel grooves.

Thus, a magnetic head for reading from or writing into the magnetic stripe can be placed near the optical identification means for identifying the light reflecting region in the card reader/writer. Therefore, the card reader/writer can be reduced in size.

According to a preferred embodiment of the present invention, the magnetic stripe extends on the major surface in parallel with a direction of movement of the card in a card reader/writer and offset from a central line of the card, the light reflecting region being provided in a smaller one of two areas on the major surface divided and defined by the magnetic stripe. Thus, the magnetic memory card of the present invention can be used with a card reader/writer having a slot through which a magnetic memory card held by hand is passed for accessing data therein with a magnetic head provided in the card reader/writer adjacent the slot. In particular, if the light reflecting region is provided remote from the portion of the card which is normally held by the user, the light reflecting region is safely protected from contamination.

Alternatively, the light reflecting region may be provided in a larger one of two areas on the major surface divided and defined by the magnetic stripe, closer to the magnetic stripe than an opposite edge of the larger area. This also allows the magnetic head and the optical head to be placed close to each other in the card reader/writer. Further, the light reflecting region may consist of a plurality of spaced apart regions, and/or a composite light reflecting region including at least two separate regions therein having different reflective directivities.

The present invention also provides a memory card reader/writer for accessing data stored in such a magnetic memory card, comprising: a slot for passing the memory card therethrough along a lengthwise direction of the slot, the slot having a depth smaller than a width of the card but great enough to receive the magnetic stripe therein; a magnetic head provided in the slot for accessing the magnetic stripe; light emitting means provided in the slot for projecting light upon the light reflecting region; and light receiving means provided in the slot for receiving light reflected by the light reflecting region.

### BRIEF DESCRIPTION OF THE DRAWINGS

Now the present invention is described in the following with reference to the appended drawings, in which:
Figure 1 is a perspective view of an essential part of a first embodiment of the magnetic memory card according to the present invention and a card reader/writer therefor;
Figure 2 is a plan view of the card of Figure 1 as it is passed through the slot of a card reader/writer;
Figure 3 is a plan view of the card reader/writer of Figure 1;
Figure 4 is an enlarged cross-sectional view of a part of Figure 3;
Figure 5 is a view as seen in the direction indicated by lines IV-IV, showing the light receiving element and the light emitting element of Figure 4;
Figure 6 is a view similar to Figure 2 showing a second embodiment of the magnetic memory card according to the present invention;
Figure 7 is a view similar to Figure 2 showing a third embodiment of the magnetic memory card according to the present invention;
Figure 8 is a view similar to Figure 2 showing a fourth embodiment of the magnetic memory card according to the present invention;
Figure 9 is a view similar to Figure 2 showing a fifth embodiment of the magnetic memory card according to the present invention;
Figure 10 is a view similar to Figure 2 showing a sixth embodiment of the magnetic memory card according to the present invention; and
Figure 11 is a view similar to Figure 5 showing the light receiving element and the light emitting element of the sixth embodiment.

### DETAILED DESCRIPTION OF THE PREFERRED EMBODIMENTS

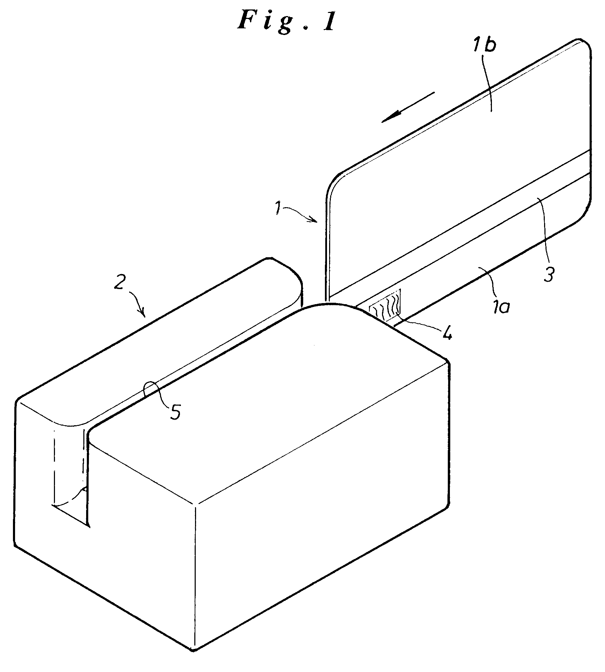

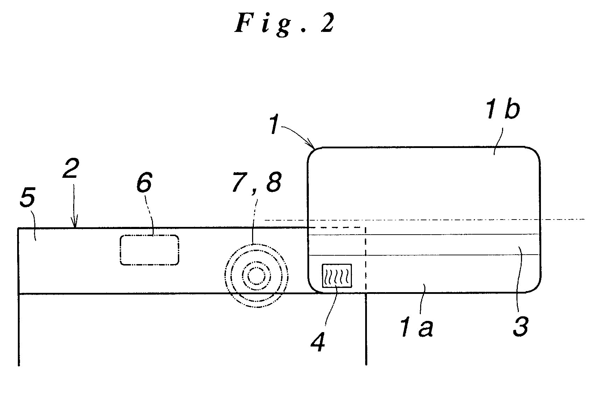

Figure 1 is a perspective view schematically illustrating the magnetic memory card 1 and the card reader/writer 2 according to a first embodiment of the present invention. Figure 2 shows the card 1 in a plan view.

Referring to Figures 1 and 2, a magnetic stripe 3 extends on the major surface of the rectangular card 1 in parallel with its conveying direction, and is offset from its central line indicated by the chain-dot line according to the requirement of JIS and ISO thereby defining a smaller part 1a and a larger part 1b on the major surface thereof. A rectangular hologram 4 serving as a light reflecting region is provided in the smaller part 1a defined by the magnetic stripe 3, the hologram 4 being provided with a specific diffractive property which diffracts incident light directed thereto to specific directions.

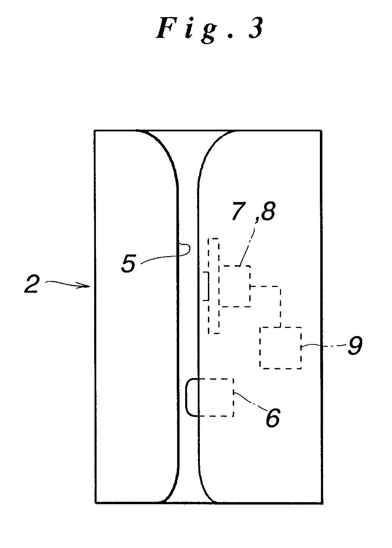

Meanwhile, the card reader/writer 2 is provided with a slot 5 for passing therethrough a part of the card 1 including the magnetic stripe 3 and the smaller part 1a. As shown in Figure 3, in the card reader/writer 2, a magnetic head 6 faces the slot 5 for accessing the data of the magnetic stripe 3. A light emitting element 7 is also provided in the card reader/writer 2 upstream of the magnetic head 6 with respect to the direction of the movement of the card 1 in the slot 5 so that a light beam consisting of a laser beam may be impinged upon the hologram 4 to identify the authenticity of the card.

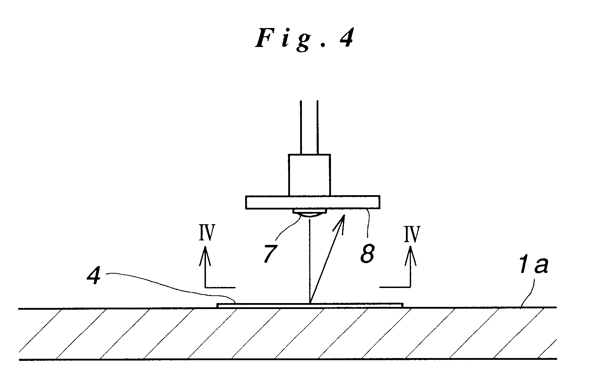

As shown in Figure 4, the light emitting element 7 and the hologram 4 squarely face each other when the hologram 4 passes by the light emitting element 7. Thus, the light emitting element 7 projects a light beam onto the hologram 4 with optical axis at right angle relative to the plane of the hologram 4.

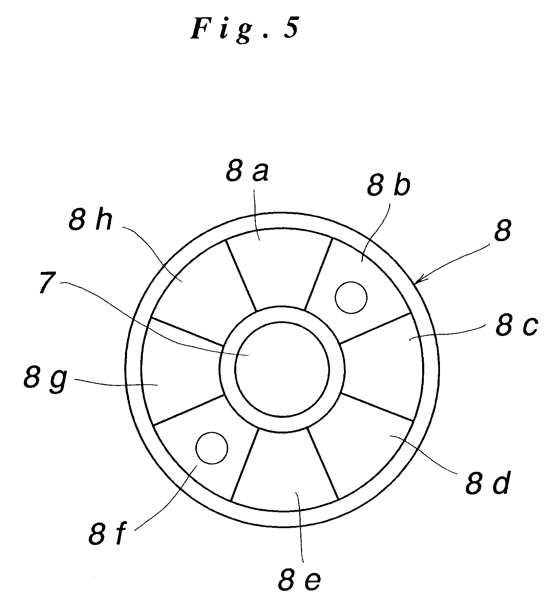

The light emitting element 7 is surrounded by an annular light receiving element 8 integral therewith as illustrated in Figure 5. The light receiving element 8 consists of a multi-section photo diode which is divided into eight sectors 8a - 8h of an equal size by radial lines so that each sector can individually detect light. The light receiving element 8 is connected to an optical identification unit 9 which may consist of a known combination of a CPU, memory, and I/F circuits to identify the authenticity of the card.

When accessing data in the magnetic memory card 1 by using the card reader/writer 2, the card 1 is held by hand and passed through the slot 5 in the card reader/writer 2 in the direction indicated the arrow in Figure 1. Because the hologram 4 and the light emitting element 7 face each other when the card 1 is passed through the slot 5, the light beam is projected upon the hologram 4, and the reflected light beam is received, for instance, by a pair of sectors 8b and 8f which are located diametrically opposite to each other with respect to the center of the light emitting element 7 as illustrated in Figure 5. When the intensity of the light received by the predetermined sectors is higher than a prescribed level, the optical identification unit 9 identifies the card as authentic. Then, the magnetic head 6 reads data from the magnetic stripe 3 only when the card is thus identified as authentic.

Therefore, according to the present invention since the analysis of the hologram is so difficult and the equipment required for the counterfeit of the hologram is so expensive that, even when the card is stolen for the purpose of counterfeit, the counterfeiting of the card can be effectively prevented. According to this embodiment, the light emitting/receiving elements 7 and 8 may be placed near the magnetic head 6, and the depth of the slot 5 is not required to be increased due to the inclusion of the light emitting/receiving elements 7 and 8 in the card reader/writer 2.

In this embodiment, the hologram (light reflecting region) and the light emitting element were located opposite to each other when light is projected upon the hologram. It is also possible to change the path of the light beam by such means as mirrors and prisms. Further, although the magnetic data was accessed after the optical identification of the card was completed according to the above described embodiment, it is also possible to reverse this order, or, in other words, the card may be optically identified after the accessing of the magnetic data is completed.

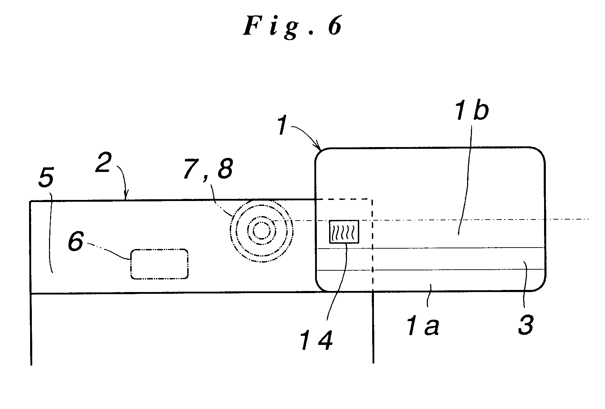

Figure 6 shows a second embodiment of the present invention, and like parts are denoted with like numerals in the drawings illustrating different embodiments of the present invention. In this embodiment, a hologram 14 is provided in a larger part 1b of the major surface of the magnetic card 1 divided by the magnetic stripe 3. However, the hologram 14 is located on the same side of the magnetic stripe 3 with respect to a central line of the card 1 which is indicated by the chain-dot line in Figure 6. Other details of the structure are similar to those of the first embodiment. According to this embodiment also, the light emitting/receiving elements 7 and 8 may be placed near the magnetic head 6, and the depth of the slot 5 is not required to be increased due to the inclusion of the light emitting/receiving elements 7 and 8.

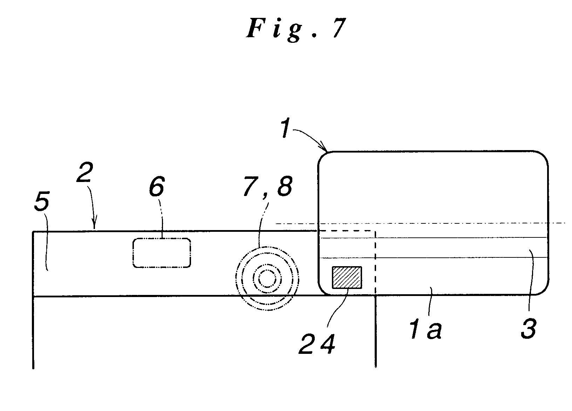

Figure 7 shows a third embodiment of the present invention. In this embodiment, a diffraction grating 24 having a specific diffractive property is provided on the major surface of the card 1.

The diffraction grating 24, consisting of hundreds to thousands grooves/mm, diffracts and reflects the 0-th order diffraction light as a spot light onto a selected pair of sectors located diametrically opposite to each other from the sectors 8a - 8h of the light receiving element 8 when a light beam is projected onto the diffraction grating 24 with the optical axis extending at right angle with the major surface of the card 1.

In the above described embodiments, the hologram and the diffraction grating were used, but a patch containing numerous parallel V- or U-shaped grooves at the rate of a few to hundreds grooves/mm may also be used. In this case, an oval pattern of light is received by a pair of diametrically opposed sectors of the light receiving element 8 in the same manner as in the first embodiment.

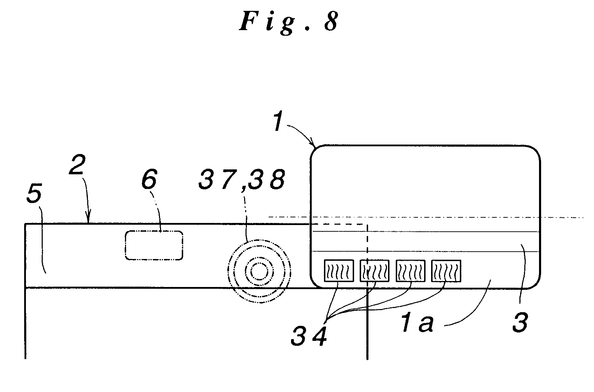

Figure 8 shows a fourth embodiment of the present invention which is similar to the first embodiment illustrated in Figure 2. In this embodiment, a plurality of holograms 34, each consisting of a hologram similar to that of the first embodiment, are provided in a row extending along the conveying direction of the card 1 in the smaller part 1a of the major surface of the card 1 divided by the magnetic stripe 3. According to this embodiment, the counterfeit of the card 1 is made even more difficult because each of the holograms 34 must be individually analyzed and duplicated, and a structure similar to a combination lock is provided. Furthermore, according to this embodiment, information may be stored in the holograms 34 by different combination thereof.

In this embodiment, the holograms 34 were provided in the smaller part 1a on the major surface of the card 1 divided by magnetic stripe 3, but the holograms 34 may also be provided in the larger part 1b on the major surface of the card 1, preferably on the same side of the central line as the magnetic stripe 3.

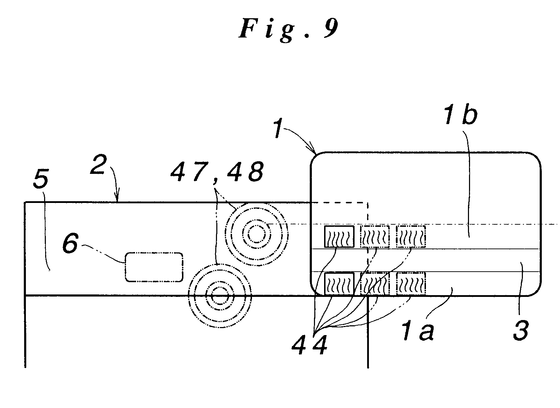

Figure 9 is a view similar to Figure 2 showing a fifth embodiment of the present invention. In this embodiment, a pair of holograms 44, which are similar to those used in the first and second embodiments, are provided one in each of the smaller part 1a and the larger part 1b on the major surface of the card 1 divided by the magnetic stripe 3 or one on each side of the magnetic stripe 3. An optical head including a light emitting element 47 and a light receiving element 48 is provided one on each side of the magnetic stripe 3 in the card reader/writer 2 in a corresponding manner. In this embodiment, the magnetic stripe 3 is offset from the central line of the card 1, and the holograms 44 are provided adjacent to the magnetic stripe 3, preferably but not necessarily, so that the holograms 44 may be located on one side of the central line which is indicated by the chain-dot line in Figure 9.

According to this embodiment, the counterfeit of the card 1 is made even more difficult because each of the holograms 44 must be individually analyzed and duplicated, and a structure similar to a combination lock is provided. Furthermore, according to this embodiment, information may be stored in the holograms 34 by different combination thereof. Otherwise, the present invention is similar to the first and second embodiments. As a modification of the present embodiment, it is possible to provide a plurality of holograms 44 on each side of the magnetic stripe 3 as indicated by the imaginary lines in Figure 9.

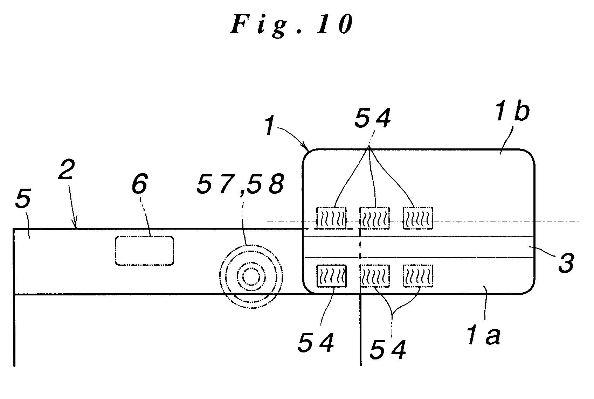

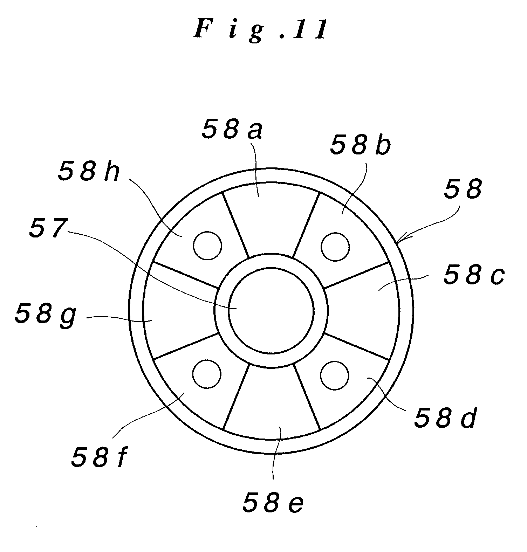

Figure 10 is a view similar to Figure 2 showing a sixth embodiment of the present invention. This embodiment is similar to the first embodiment in that the hologram 54 is provided in the smaller part 1a on the major surface of the card 1 divided by the magnetic stripe 3. However, according to this embodiment, as shown in Figure 11, the hologram 54 has a composite diffractive property which can project composite diffraction light beams to two pair of sectors 58b, 58d, 58f and 58h, each pair consisting of diametrically opposing pair of sectors of the light receiving element 58. For details of the composite diffractive property, reference should be made to the aforementioned copending patent application No. 07/788,569.

This structure is also effective in discouraging the counterfeit of the card for the same reasons as given above.

In this embodiment, the hologram 54 is provided in the smaller part 1a divided by the magnetic stripe 3, but a plurality of holograms 54 may also be provided in the larger part 1b or in both the parts 1a and 1b as indicated by the imaginary lines in Figure 10.

As described above, the size reduction of the card reader/writer can be accomplished because the magnetic head for reading the magnetic stripe may be located in close proximity of the optical identification means for identifying the light reflecting region because the light reflecting region having a specific diffractive property for identification purpose is provided in the close proximity of the magnetic stripe according to the magnetic memory card of the present invention.

Although the present invention has been described in terms of specific embodiments, it is possible to modify and alter details thereof without departing from the scope of the present invention which is set forth in the appended claims.

## Claims

1. A magnetic memory card carrying a magnetic stripe on a major surface thereof for magnetically recording data therein, comprising:
a light reflecting region provided on said major surface adjacent said magnetic stripe, said region having a specific reflective directivity which can be detected with optical identification means.

2. A magnetic memory card according to claim 1, wherein said magnetic stripe extends on said major surface in parallel with a direction of movement of said card in a card reader/writer and offset from a central line of said card, said light reflecting region being provided in a smaller one of two areas on said major surface divided and defined by said magnetic stripe.

3. A magnetic memory card according to claim 1, wherein said magnetic stripe extends on said major surface in parallel with a direction of movement of said card in a card reader/writer and offset from a central line of said card, said light reflecting region being provided in a larger one of two areas on said major surface divided and defined by said magnetic stripe, closer to said magnetic stripe than an opposite edge of said larger area.

4. A magnetic memory card according to claim 1, wherein said light reflecting region consists of a plurality of spaced apart regions.

5. A magnetic memory card according to claim 4, wherein said light reflecting regions are provided on either side of said magnetic stripe.

6. A magnetic memory card according to claim 4, wherein said light reflecting region consists of a composite light reflecting region including at least two separate regions therein having different reflective directivities.

7. A magnetic card according to claim 1, wherein said light reflecting region consists of a hologram having a specific diffractive property.

8. A magnetic card according to claim 1, wherein said light reflecting region consists of a diffraction grating having a specific diffractive property.

9. A magnetic card according to claim 1, wherein said light reflecting region consists of a multiplicity of parallel U- or V-grooves having a specific reflective property.

10. A memory card reader/writer for accessing data stored in a magnetic stripe of a memory card according to claim 1, comprising:
a slot for passing said memory card therethrough along a lengthwise direction of said slot, said slot having a depth smaller than a width of said card but great enough to receive said magnetic stripe therein;
a magnetic head provided in said slot for accessing said magnetic stripe;
light emitting means provided in said slot for projecting light upon said light reflecting region; and
light receiving means provided in said slot for receiving light reflected by said light reflecting region.
